# EUROPÄISCHE PATENTANMELDUNG

(11) **EP 1 177 720 A2**
(43) Veröffentlichungstag der Anmeldung: **06.02.2002**
(21) Anmeldenummer: 01870119.3
(22) Anmeldetag: 07.06.2001
(51) Int. Cl.: A01G 3/08

(54) **Verbessertes Gestänge**

(30) Priorität: 09.06.2000 BE 200000373
(71) Anmelder: Drosch, Norbert, 4700 Eupen (BE)
(72) Erfinder: Drosch, Norbert, 4700 Eupen (BE)

(57) **Zusammenfassung**

Die Erfindung betrifft ein Gestänge, insbesondere für Antennen oder Hochastungssägen mit langem Gestänge (3) und darauf montiertem Sägeblatt (50), wobei das Gestänge (3) mindestens einen, im Abstand von den Enden ungefähr senkrecht angebrachten Abstandhalter (5), und mindestens zwei, vorzugsweise vier Kabellängen (17,19,29,31), die je an einem Ende des Gestänges (3) befestigt sind, und über den Abstandhalter (5) zum anderen Ende des Gestänges (3) führen, aufweist.

## Beschreibung

Die hier beschriebene Erfindung betrifft ein vorteilhafterweise verbessertes Gestänge für Antennen und ähnliche Anwendungen, insbesondere für Hochastungssägen.

Der Stand der Technik kennt Gestänge grösserer Länge, die durch verschiedene Techniken verstärkt sind, wie zum Beispiel leichtgewichtige durch Fasern verstärkte Verbundstoffrohre. Wenn grössere Längen verlangt werden, können diese Verbundstoffrohre oder auch Leichtmetallrohre den Ansprüchen, insbesondere in Bezug auf die Stabilität, trotzdem nicht gerecht werden, und es müssen andere Lösungen gesucht werden.

Im Falle von herkömmlichen Hochastungssägen zum Beispiel, sind die Gestänge im Allgemeinen aus dickwandigen Leichtmaterialrohren gefertigt, um eine mehr oder weniger akzeptable Stabilität bei grösseren Längen zu erlangen. Das für solche Sägearbeiten zu hohe Eigengewicht führt zur Schwerstarbeit für den Waldarbeiter, wenn über einen längeren Zeitraum gesägt werden soll. Ausserdem, ist die durch Leichtmetallrohre erreichte Stabilität unzureichend so dass diese Sägen auch noch schwanken oder vibrieren, und somit die Arbeit erschweren. Leichtmaterialrohre ovalen Querschnittes können zwar die Stabilität in einer Richtung leicht verbessern, zeigen jedoch eine geringere Stabilität in senkrechter Richtung. Zudem, sind solche Gestänge meist ausziehbar oder teleskopisch ausgeführt, und bieten somit eine mit der Länge abnehmende Stabilität.

Ein Ziel der Erfindung ist es, Gestänge so zu verbessern, dass sie auch bei grösseren Längen eine verbesserte Stabilität aufweisen, wobei das Gewicht in annehmbaren Grenzen gehalten wird.

Ein weiteres Ziel der Erfindung besteht darin, ein für Hochastungssägen vorteilhaftes Gestänge auszubilden, das den Anforderungen der Waldarbeit entspricht, insbesondere der Hochentastung.

Ein anderes Ziel der Erfindung besteht darin, eine verbesserte Hochastungssäge auszubilden, die es erlaubt ein besseres Arbeitsergebnis zu erhalten.

Das Ziel der Erfindung ist dadurch erreicht, dass das Gestänge mindestens einen, im Abstand von den Enden ungefähr senkrecht angebrachten Abstandhalter, und mindestens zwei Kabellängen, die je an einem Ende des Gestänges befestigt sind, und über den Abstandhalter zum anderen Ende des Gestänges führen, aufweist.

Wenn die Spannkabel gespannt sind, wird das rohrförmige Gestänge insbesondere gegen Biegung und Schwankung verstärkt.

In einer Ausführungsform, ist der Abstandhalter ringförmig ausgeführt und besitzt entsprechende Führungen für die Kabellängen.

In einer bevorzugten Ausführungsform beträgt der Abstandhalter vier Arme, und vier Kabellängen reichen von einem Gestängeende zum anderen über je ein Armende.

Das erfindungsgemässe Gestänge zeichnet sich durch ein geringes Eigengewicht und eine hohe Stabilität aus. Das Gestänge kann aus gängigen Leichtmaterialrohren gefertigt sein oder sogar aus Bambusrohren, und die Kabel weisen ein relativ geringes Gewicht auf. Die genannten Kabel können vorteilhafterweise von sehr dünnem Querschnitt sein.

Erfindungsgemäss kann die Kabelspannung dadurch erreicht werden, dass alle Arme oder einige der Arme des jeweiligen Abstandhalters längsregelbar ausgeführt sind. Nach einer anderen Ausführungsform kann mindestens eines der Kabelenden an einem Kabelspanner befestigt sein, der seinerseits am Ende des Gestänges befestigt ist. Beide Möglichkeiten können auch kombiniert Anwendung finden.

Ein solches erfindungsgemäss stabilisiertes Gestänge kann vorteilhafterweise Anwendung in verschiedenen Gebieten der Technik finden. Als Beispiel sollen hier Antennenmaste, sowie auch Hochsitztürme und genannt werden. Weitere Anwendungsmöglichkeiten findet man in der Konstruktion von Hochleistungsmasten und Masten für Windkraftanlagen. Die Erfindung erlaubt es erhebliche Kosten an Material- und Arbeitsaufwand einzusparen, wobei die Stabilität erhalten bleibt und die Schwankneigung eingeschränkt wird.

Nach einer besonders vorteilhaften Ausbildung der Erfindung, kann ein solches Gestänge für Hochastungssägen Anwendung finden. Hochastungssägen, die mit solchem Gestänge ausgerüstet sind, erlauben es dem Waldarbeiter mit Gefühl am Astansatz (Bourelet) anzusetzen und sicher und schonend zu sägen. Zudem sind solche erfindungsgemässe Sägen leichter zu handhaben als herkömmliche Hochastungssägen, da sie leicht sind und trotzdem eine zweckmässige Stabilität aufweisen, und somit nicht mehr oder weniger zum Schwanken oder Vibrieren neigen.

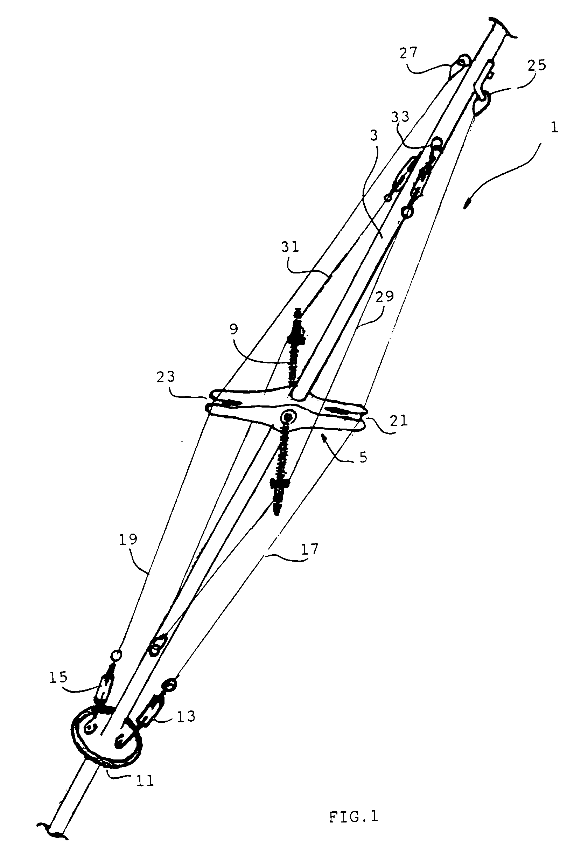

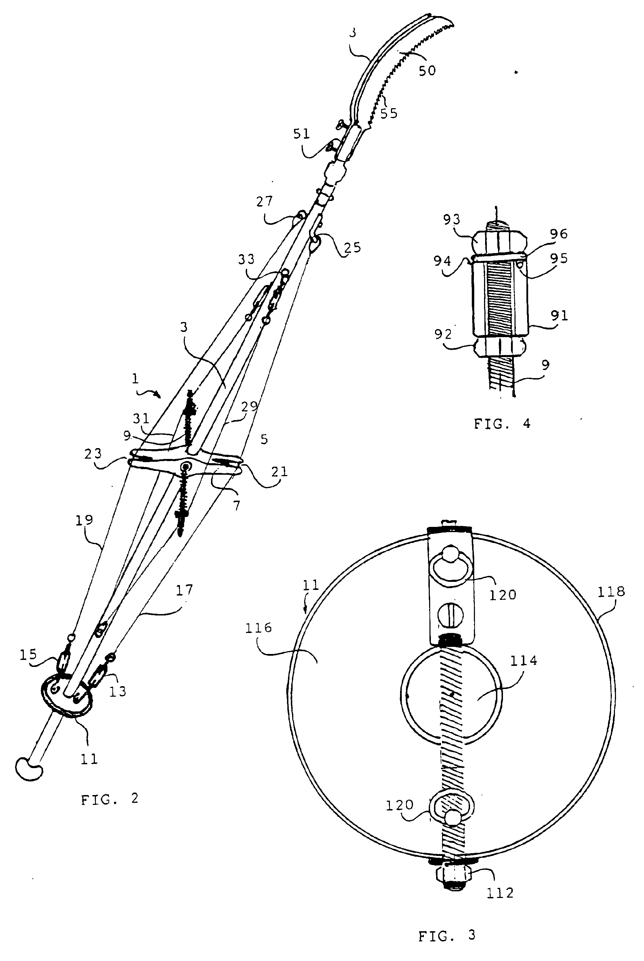

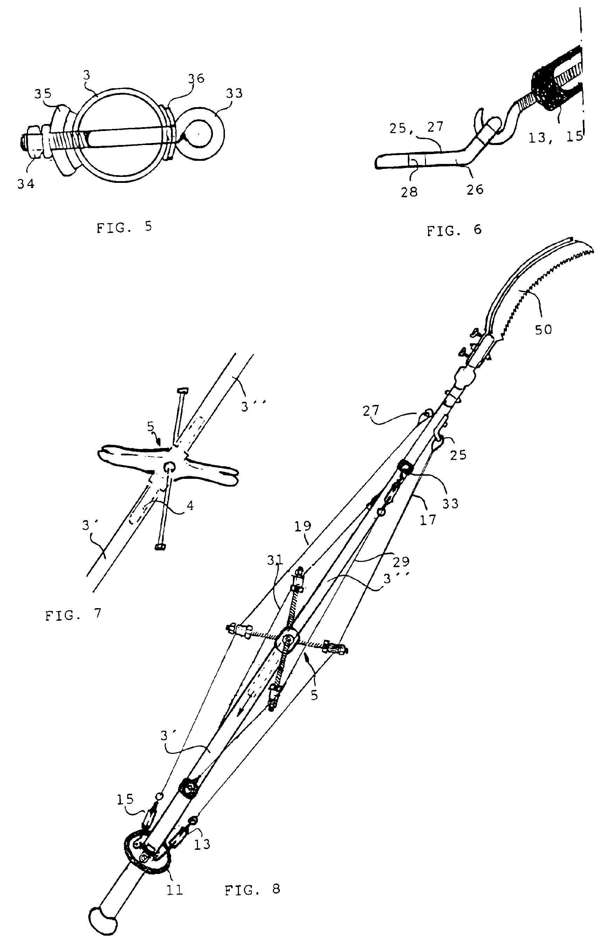

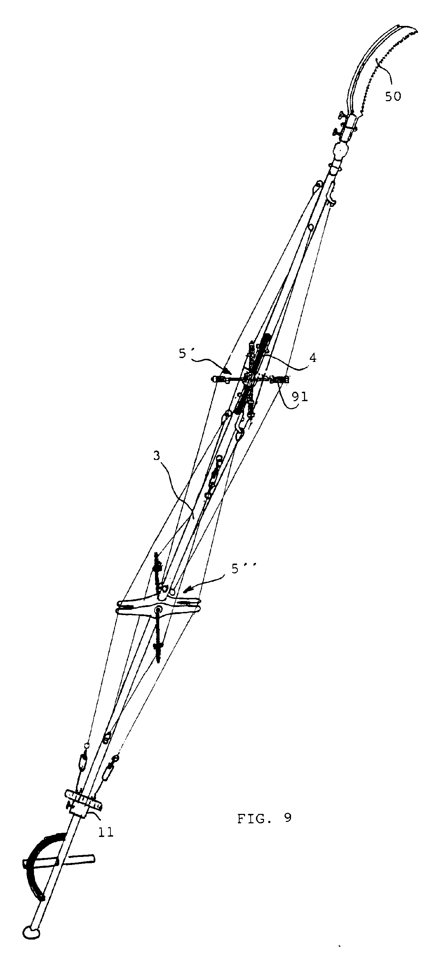

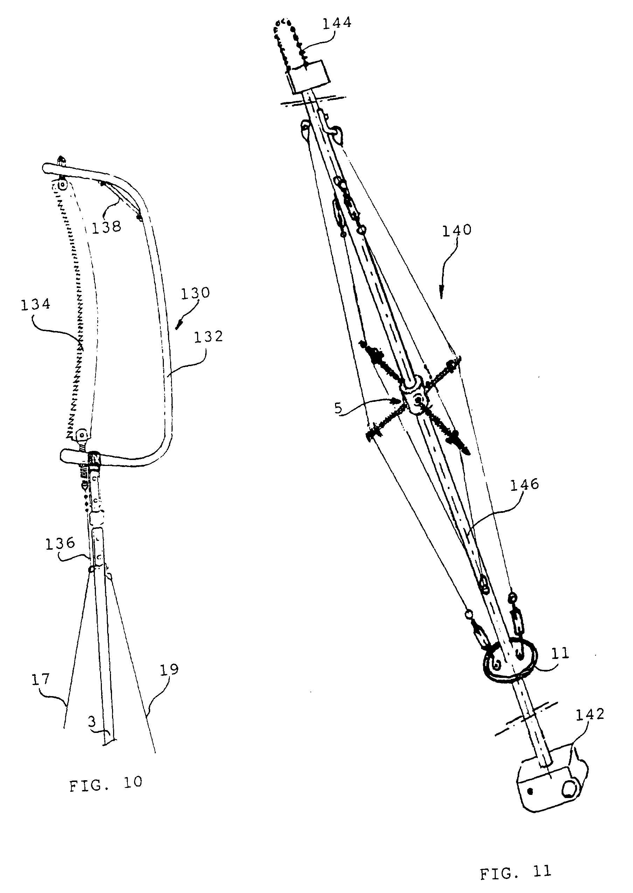

Andere Vorteile und Ausführungsformen der Erfindung werden nachträglich mit Bezug auf die beigefügten Abbildungen beschrieben, wobei
■ Figur 1 ein erfindungsgemässes Gestänge darstellt;
■ Figur 2 eine Ausführungsform einer Hochastungssäge darstellt;
■ Figur 3 eine Detailabbildung einer Muffe zur Befestigung der Spannkabel darstellt;
■ Figur 4 ein Armende eines Abstandhalters darstellt;
■ Figur 5 eine Variante der Befestigung eines Spannkabels am Basisgestänge abbildet;
■ Figur 6 eine Detailabbildung der Befestigung eines Kabelspanners am Basisgestänge darstellt;
■ Figur 7 eine Variante des Gestänges der in Figur 2 abgebildeten Hochastungssäge darstellt;
■ Figur 8 eine andere Variante einer solchen Säge darstellt;
■ Figur 9 eine weitere Variante einer Hochastungssäge darstellt;
■ Figur 10 eine für das erfindungsgemässe Gestänge angepasste Bügelsäge darstellt; und
■ Figur 11 eine Hochastungsmotorsäge darstellt.

Wie vorher beschrieben besteht das erfindungsgemäss versteifte Gestänge 1 aus einem Leichtmaterialrohr 3, wie zum Beispiel ein faserverstärktes Kunststoffrohr oder ein Aluminiumrohr. Im mittleren Bereich der Rohrlänge, ist das Rohr 3 mit einem mehrarmigen Abstandhalter, vorzugsweise vierarmigen Abstandhalter 5, versehen. Wie hier dargestellt, besteht dieser Abstandhalter 5 aus einem Holzsteg 7, der einerseits vom Rohr 3 durchquert wird, und andererseits, 90 Grad versetzt, von einer Gewindestange 9 zweckmässigerweise gleicher Länge durchsetzt ist, die ihrerseits auch das Rohr durchsetzt und somit den Abstandhalter 5 am Rohr 3 sichert. Das erfindungsgemässe Gestänge ist weiter mit vier Kabellängen versehen die je von einem Rohrende, über den Abstandhalter 5, zum anderen Rohrende führen. An einem Rohrende ist eine Muffe 11 (wie weiter unten beschrieben) befestigt, an der, über je einen Kabelspanner 13, 15, die Enden der zwei Kabel 17, 19 befestigt sind, die über die Enden des Holzsteges 7 führen. Die beiden Enden des Holzsteges 7 sind mit einer Einkerbung 21, 23 versehen, durch die die jeweiligen Spannkabel 17, 19 laufen. Die anderen Enden dieser Kabel sind durch später beschriebene Ösen 25, 27 am Rohr 3 gesichert. Zwei weitere Kabel 29, 31 sind mit ihren beiden Enden am Rohr 3 gesichert (zum Beispiel über Ösen 33) und führen je über die Enden der Gewindestange 9, die, wie weiter unten beschrieben, dazu befähigt sind, die genannten Kabel 29,31 zu spannen.

Der Abstandhalter kann selbsverständlich auch ringförmig ausgeführt, und mit entsprechenden am Aussenring angebrachten Kabelführungen versehen sein.

Wie leicht nachzuweisen, ist ein solches Gestänge sehr stabil, wenn die Kabel recht gespannt sind, und neigt nicht oder weniger zur Schwankung, wogegen herkömmliche Gestänge schwanken und vibrieren je länger das Rohr ist. Folglich können, bei optimal verbesserter Stabilität, erhebliche Material- und Arbeitskosten eingespart werden. Dies gilt für verschiedene Bereiche der Technik.

Der Fachmann wird leicht ersehen, dass die Einkerbungen 21, 23 je durch einen eingelassenen Metallstift verstärkt werden können.

Auch kann, anstatt des Holzsteges 7, eine weitere Gewindestange verwendet werden, wobei dann beide Gewindestangen kreuzweise durch das Rohr führen, und die Kabelspanner 13, 15 entfallen können.

Das Rohr 3 kann auch aus einer Stange z.B aus Holz gefertigt, oder aus mehreren mit einander verbundenen Rohren oder Stangen bestehen, die z.B. in einem Bündel gebunden sein können oder ringförmig angebracht sein können, um somit die Stabilität noch weiter zu erhöhen.

Figur 2 zeigt eine erfindungsgemässe Hochastungssäge, die aus einem Basisgestänge 1 wie oben angeführt und einem Sägeblatt 50 besteht. Das Sägeblatt kann entweder direkt mit seinem Halter 51 über das obere Ende des Rohres 3 gestülpt sein, oder über einen nicht dargestellten Holzadapter, der einerseits in das Rohr 3 und andererseits in den Halter 51 führt. Ein solches Sägeblatt kann ein herkömmliches Sägeblatt, zum Beispiel ein sensenförmiges Blatt, oder ein erfindungsgemäss versteiftes Sägeblatt sein. Die Versteifung kann aus einem Bügel 53 bestehen, der an der der Sägekante 55 entgegengesetzten Seite des Sägeblattes 50 angeschweisst sein kann. Die Sägekante 55 weist vorzugsweise eine feine Verzahnung, zum Beispiel für Fichtentrockenastung, oder eine grobe Verzahnung zum Beispiel für Douglasiengrünastung.

Während herkömmliche Hochastungssägen im Allgemeinen ein zu hohes Eigengewicht aufweisen, und bei der Sägearbeit zum Schwanken neigen, bzw. das Sägeblatt auf dem abzusägenden Ast springt, und somit keine saubere Schnittstelle erlaubt, die dann wiederum das Eindringen von Fäulnispilzen erleichtert, zeichnet sich die erfindungsgemässe Hochastungssäge durch ein sehr geringes Eigengewicht und eine sehr hohe Stabilität aus. Rohr 1 und Sägeblatt 50 bilden eine stabile Einheit. Infolge der sehr leichten Handhabung kann diese Säge auch ganz oben am Astansatz mit Gefühl angesetzt werden, und erlaubt ein schonenderes und sichereres Ansägen. Die Nutzholzqualität des Rohholzes wird durch Ästigkeit stark herabgesetzt, und ein Stamm soll womöglich astrein wachsen. Deshalb ist, besonders bei Nadelbäumen, ein frühzeitiges Entfernen der dürren, trockenen Aststummel unentbehrlich. Diese Arbeit soll aber mit grösster Sorgfalt erfolgen, um unnötige Wunden und damit verbundene Fäulniserkrankungen zu vermeiden.

Die folgenden Abbildungen 3 bis 6 stellen, in vergrössertem Massstab, verschiedene Details des Basisgestänges dar. So stellt Figur 3 die bevorzugt kreisförmige Muffe 11 dar, an der die Spannkabel 17 und 19 befestigt sind. Diese Muffe kann aus Holz oder anderen vorteilhaften Leichtmaterialien gefertigt sein. Zweckmässigerweise wird die Muffe 11 durch eine Halteklammer oder ähnliches Befestigungsmittel 112 an das durch die Öffnung 114 gehende Rohr 3 befestigt. Um der starken Beanspruchung besserten Widerstand zu leisten, kann der Muffenflansch 116 in ein Metallband 118 eingespannt sein. Die zur Achsenrichtung senkrechte Fläche des Muffenflansches beträgt zwei gut befestigte Ösen 120, durch die die Spannkabel 17, 19 geführt werden.

Figur 4 stellt in vergrössertem Massstab ein Armende eines Abstandhalters dar, wobei der besagte Arm aus einer Gewindestange 9 besteht. Diese trägt an ihrem Ende eine Düse 91, die zwischen zwei Schraubenmuttern 92 und 93 gehalten wird. In der ringförmigen, zur Achsenrichtung senkrechten Frontfläche 94 der Düse 91 ist eine Einkerbung 95 eingearbeitet, dessen Durchschnitt grösser ist als der eines Spannkabels, so dass ein Spannkabel 29 oder 31 in der Einkerbung frei gleiten kann. Vorzugsweise kann noch eine Scheibe 96 zwischen Mutter 93 und Düse 91 eingespannt sein. In einer Variante, kann auch die untere Mutter 92 entfallen, und die Düse eine Gewindebohrung aufweisen, wobei der Spannkabel ebenfalls frei in eine Einkerbung 95 gleiten kann, und eine Mutter 93 den Spannkabel, möglicherweise unter Benutzung einer Zwischenscheibe 96 vor dem Herausfallen sichert.

Figur 5 stellt eine starre am Rohrmaterial 3 gesicherte Gewindeöse 33 dar, die zur Befestigung eines Spannkabels am Rohr 3 dient. Die Gewindeöse 33 durchquert das Rohr 3 und ist mittels einer Schraubenmutter 34 an diesem befestigt. Zwischen Mutter 34 und Rohr 3 kann noch ein der Rohrrundung angepasster Halterungsschuh 35 eingespannt sein. Vorteilhafterweise kann noch mindestens eine Lage aus elastischem Material zwischen Öse 33 und Rohr 3 eingespannt sein, um die Haftfähigkeit zu verstärken.

Schliesslich stellt Figur 6 eine Variante einer Kabelbefestigung dar. Es handelt sich hier um die Öse 25 oder 27, die hauptsächlich in einer der Rohrrundung angepassten Hartmaterialplatte eingearbeitet ist und somit über eine Schraube, die durch die Bohrung 28 führt, am Rohr 3 befestigt sein kann.

In der in Figur 7 dargestellten Variante des Basisgestänges, ist das Rohr zwei- oder mehrteilig gefertigt. Die verschiedenen Teile 3'oder 3" sind über einen Adapter 4 miteinander verbunden. Vorteilhafterweise trägt dieser Adapter den mehrarmigen Abstandhalter 5. Die Vorteile dieser Ausführungsform liegen auf der Hand: zum einen, kann das Basisgestänge einfach auseiander- und zusammengebaut werden, um somit den Transport zu erleichtern; zum anderen, können demzufolge grössere Längen zusammengesetzt werden.

Die in Figur 8 dargestellte Ausführungsform ist ein teleskopisch ausgebildetes Basisgestänge. Dementsprechend lässt sich das (obere) Rohrstück kleineren Querschnitts 3", nach dem Lösen der Kabelspanner, in das (untere) Rohrstück 3' grösseren Querschnitts einschieben. Vorteihafterweise ist der mehrarmige Abstandhalter 5 auf eines der Rohrteile, bevorzugterweise das Rohrstück grösseren Querschnitts 3', aufgespannt oder geschweisst oder in ähnlicher Weise befestigt, um ein bequemes Einschieben des Rohrstücks 3" zu erlauben. Es können ebenfalls die Kabelbefestigungen (Ösen) entfernt werden, um somit die Einstecktiefe zu optimieren.

Die Figur 9 stellt nun eine Variante einer Hochastungssäge dar. Dieses Basisgestänge beträgt zwei mehrarmige Abstandhalter 5 und 5'. Somit erlaubt sie grössere Gestängelängen, und auch Hochasten bis zu 8m Höhe oder mehr.

Erfindungsgemäss, kann am Ende des Gestänges eine Bügelsäge 130 montiert werden (mit Bügel 132), dessen spannbares Sägeblatt 134 durch ein Kabel 136 gespannt werden kann, welches eines der das Gestänge versteifende Kabel sein kann (siehe Fig 10). Vorteilhafterweise kann der Bügel 132 noch an dem dem Gestänge gegenüberliegenden Ende versteift sein (138). Der Abstand zwischen dieser Versteifung und dem Sägeblatt sollte jedoch genügend sein, um das Sägen von Ästen nicht zu behindern.

Nach einer weiteren Ausführungsform der Erfindung, kann das erfindungsgemässe Gestänge mit einer Astschere versehen werden. Solche Astscheren sind an sich bekannt. Sie werden entweder durch eine Kordel oder einen Kabel betätigt, oder allein durch die Ziehkraft, die durch den Bediener am Gestänge ausgeübt wird.

Wie aus Figur 11 ersichtlich, kann das erfindungsgemässe Gestänge ebenfalls für Motorsägen Anwendung finden. Die schematische Darstellung ist eine Hochastungsmotorsäge 140, wobei der an sich bekannte Motor 142 am unteren Ende der Kettensäge und das Kettenwerkzeug 144 am oberen Ende des erfindungsgemässen Gestänges befestigt ist. Der Antrieb geschieht über ein im erfindungsgemässen Gestänge längs gelagertes Antriebgestänge 146. In dieser Ausführungsform muss dann darauf geachted werden, dass der Abstandhalter so ausgebildet ist, dass er den Durchgang des Antriebgestänges nicht behindert.

Es können auch weitere Werkzeuge auf dem erfindungsgemässen Gestänge montiert werden.

Die Erfindung ist nicht auf die beschriebenen Ausführungsformen begrenzt, sondern erstreckt sich auf ähnliche Ausführungsformen, die ähnliche Elemente und Funktionen haben.

## Patentansprüche

1. Gestänge **dadurch gekennzeichnet, dass** es mindestens einen, im Abstand von den Enden ungefähr senkrecht angebrachten Abstandhalter (5), und mindestens zwei Kabellängen (17,19,29,31), die je an einem Ende des Gestänges (3) befestigt sind, und über den Abstandhalter (5) zum anderen Ende des Gestänges (3) führen, aufweist.

2. Gestänge nach Anspruch 1 **dadurch gekennzeichnet dass** der Abstandhalter ringförmig ausgeführt ist, wobei die Kabellängen entsprechend geführt sind.

3. Gestänge nach Anspruch 1 **dadurch gekennzeichnet dass** der Abstandhalter (5) mindestens zwei, vorzugsweise vier Arme aufweist, und mindestens zwei, vorzugsweise vier Kabellängen (17,19,29,31) von einem Gestängeende zum anderen über je ein Armende (7,9) reichen.

4. Gestänge nach Anspruch 3 **dadurch gekennzeichnet, dass** einer oder mehrere oder alle Arme des jeweiligen Abstandhalters aus einem festen Steg bestehen.

5. Gestänge nach Anspruch 3 **dadurch gekennzeichnet, dass** einer oder mehrere oder alle Arme des jeweiligen Abstandhalters längsregelbar ausgeführt sind.

6. Gestänge nach Anspruch 5 **dadurch gekennzeichnet, dass** der Arm aus einer Gewindestange besteht, dessen Ende eine Düse (91) trägt, die zwischen zwei Muttern (92,93), zweckmässigerweise unter Zwischenschaltung einer Scheibe (96), gehalten wird, und die, in ihrer zur Achsenrichtung senkrechten Frontfläche (94), eine Einkerbung (95) für das freie Gleiten des jeweiligen Spannkabels (29,31) aufweist.

7. Gestänge nach Anspruch 5 **dadurch gekennzeichnet, dass** der Arm aus einer Gewindestange besteht, dessen Ende eine mit Gewindebohrung versehene, aufgeschraubte Düse trägt, die, in ihrer zur Achsenrichtung senkrechten Frontfläche, eine Einkerbung für das freie Gleiten des jeweiligen Spannkabels aufweist, und eine Mutter den Spannkabel, möglicherweise unter Benutzung einer Zwischenscheibe vor dem Herausfallen sichert.

8. Gestänge nach Anspruch 1 bis 7 **dadurch gekennzeichnet, dass** mindestens eines der Kabelenden an einen Kabelspanner (13,15) befestigt ist, der seinerseits am Ende des Gestänges (3) befestigt ist.

9. Gestänge nach Anspruch 1 bis 8 **dadurch gekennzeichnet, dass** die Kabelenden an einer Muffe (11) befestigt sind, die sich an einem Ende des Gestänges (3) befindet, wobei diese Muffe (11) am Rohr (3) gesichert ist und einen Flansch (116) aufweist, dessen zur Achsrichtung senkrechte Flanschfläche mehrere Ösen (120) zur Kabelhalterung aufweist.

10. Gestänge nach Anspruch 5 **dadurch gekennzeichnet, dass** die Muffe (11) aus Holz ist, und der Flansch (116) in ein Metallband (118) eingespannt ist.

11. Gestänge nach Anspruch 1 bis 10 **dadurch gekennzeichnet, dass** es mehrere, vorzugsweise zwei Abstandhalter (5) aufweist.

12. Gestänge nach Anspruch 1 bis 10 **dadurch gekennzeichnet, dass** das Rohr (3) aus mehreren einzelnen im Kreis oder Bündel zusammem gebundenen Rohren besteht.

13. Gestänge nach Anspruch 1 bis 12 **dadurch gekennzeichnet, dass** das Rohr (3) zwei- oder mehrteilig gefertigt ist, und die verschiedenen Teile (3'oder 3") über einen Adapter (4), der zweckmässigerweise ebenfalls den Abstandhalter (5) trägt, miteinander verbunden sind.

14. Gestänge nach Anspruch 1 bis 12 **dadurch gekennzeichnet, dass** es teleskopisch ausgefertigt ist, wobei ein (oberes) Rohrstück kleineren Querschnitts (3") sich, nach dem Lösen der Kabelspanner, in ein (unteres) Rohrstück (3') grösseren Querschnitts einschieben lässt, und der mehrarmige Abstandhalter (5) auf das Rohrstück grösseren Querschnitts (3') aufgespannt oder aufgeschweisst oder in ähnlicher Weise befestigt ist.

15. Hochastungssäge **dadurch gekennzeichnet, dass** sie ein Gestänge nach Anspruch 1 bis 14 sowie ein auf dem Gestänge montiertes Sägeblatt (50) aufweist.

16. Hochastungssäge nach Anspruch 15, **dadurch gekennzeichnet, dass** das Sägeblatt mittels eines Bügels (53) versteift ist, der an der der Sägekante (55) entgegengesetzten Seite des Sägeblattes (50) angeschweisst ist.

17. Hochastungssäge **dadurch gekennzeichnet dass** sie ein Gestänge nach Anspruch 1 bis 14 sowie eine auf dem Gestänge montierte Bügelsäge (130) aufweist, dessen Sägeblatt (134) durch einen der das Gestänge spannende Kabel gespannt wird.

18. Hochastungssäge **dadurch gekennzeichnet dass** sie ein Gestänge nach Anspruch 1 bis 14 sowie eine auf dem Gestänge montierte Motorsäge aufweist, dessen Motor (142) am unteren Ende und dessen Kettenwerzeug (144) am oberen Ende des Gestänges befestigt ist, wobei das Kettenwerkzeug (144) durch ein durch das Gestänge reichendes Antriebgestänge (146) angetrieben wird.
